# EUROPEAN PATENT APPLICATION

(11) **EP 2 806 158 A1**
(43) Date of publication of application: **26.11.2014**
(21) Application number: 13185274.1
(22) Date of filing: 20.09.2013
(51) Int. Cl.: F03D 5/00, F03D 7/04

(54) **System for generating energy with switching of sailing means controlled by pulling forces**

(30) Priority: 21.05.2013 IT MI20130819
(71) Applicant: ZanettiStudios S.r.l., 20122 Milano (IT)
(72) Inventor: Zanetti, Giancarlo, 20122 Milano (IT)
(74) Representative: Pezzoli, Ennio

(57) **Abstract**

A system for generating energy (100) from a fluid flow (105) is proposed. The system comprises energy conversion means (110), sailing means (130), switching means (125), sailing connecting means (135), main connecting means (120), recovery means, aerostatic means (140), aerostatic connecting means (145), the sailing means being slidable along the aerostatic connecting means. The switching means comprises distantiating means (150), locking means (155). Moreover, the system further comprises means for applying a first pulling force to the main connecting means upon reaching a first distance of the switching means from the energy conversion means for deactivating the locking means with the sailing connecting means in a separated position in such a way to let the sailing means in the active condition slide towards the aerostatic means at least up to the contact position of the sailing connecting means wherein the sailing means wraps onto the aerostatic means thereby switching to the passive condition and for applying a second pulling force to the main connecting means upon reaching a second distance of the switching means from the energy conversion means lower than the first distance for deactivating the locking means with the sailing connecting means in the contact position in such a way to let the sailing means in the passive condition slide away from the aerostatic means at least up to the separated position of the sailing connecting means thereby switching to the active condition.

## Description

The solution according to one or more embodiments of the present invention relates to the field of the generation of energy. More specifically, this solution relates to the generation of energy from a fluid flow.

A number of energy generating systems - or simply generators - that produce useful energy (*e.g*., of electrical type) by converting another form of energy are known in the art; in particular, in recent years there has been a great development of the generators based on renewable energy sources.

In more detail, various types of generators have been developed that are able to convert kinetic energy of a fluid flow (*e.g*., wind and sea currents). Considering for exemplary purpose windpower generators, there are two main generator types. A first type of windpower generators (referred to as turbine generators) is based on big turbines installed on pillars; the fluid flow imparts a rotary motion to the blades of a turbine from which electric energy is generated. A second type of windpower generators (referred to as parachute generators) is based on flying elements that oppose resistance to the kinetic force of the fluid flow, such as parachutes.

In general, the parachute generators may be switched between a closed condition (during which they oppose a minimum resistance to the fluid flow) and an open condition (during which they are carried away by the fluid flow). Moreover, an aerostatic balloon may be provided for maintaining the parachute at a working altitude. The parachute and the aerostatic balloon are connected by a cable to an energy converter placed on the ground. The parachute is opened and closed alternately. When opened, the parachute is carried away from the energy converter by the force of the fluid flow (thereby causing the energy converter to generate energy). The parachute is then closed and returned towards the energy converter (e.g., by using a fraction of the generated energy), so as to be opened and closed again cyclically.

There are also parachute generators with double section (each one comprising a parachute and an aerostatic balloon), wherein the sections are connected by a single cable that passes through an alternating-type energy converter. In this case, the parachutes are opened and closed alternately. When a first parachute is opened, it is carried away from the energy converter by the force of the fluid flow (so as to generate useful energy); at the same time, a second parachute is closed and is brought close to the energy converter by the first parachute (i.e., without using the useful energy produced by the energy converter).

The above-mentioned parachute generators have a very low environmental impact, are simple, reliable and require very low maintenance; these qualities make the parachute generators very cheap, but at the same time with excellent energy efficiency. In this case, indeed, it is possible to exploit high-altitude winds. As it is known, the wind speed increases moving away from the ground; for example, at 800 m above ground level the wind has an average speed of 6-10 m/s for about 5,000-7,000 hours per year (compared to 4-5 m/s for 2,000-4,000 hours per year at an altitude of 80 m above ground level, *i.e.,* the working altitude of the turbine generators).

However, such parachute generators are affected by a problem relating to the switching between the opened condition and the closed condition of the parachute itself. In fact, this requires a non-negligible amount of energy since it has to be performed in opposition to the wind flow.

In the prior art, this problem was addressed by controlling additional guide wires acting on a switching mechanism for opening and closing the parachute directly from the ground. This solution has the disadvantage of being complex and prone to failures even in the simple case of twisting of the guide wires. When such twisting occurs (*e.g*., due to strong turbulences) the parachute should be brought to the ground and the guide wires should be released (for preventing damages to the parachutes and to the switching mechanism), which task is complex and time consuming.

A solution that solves at least partly the above mentioned problems is disclosed in the international patent application WO 2010/015720 of the same Applicant; this document describes a system for generating energy from a fluid flow, wherein a pair of parachute means, each one independently switchable between an active condition and a passive condition, is able to slide along connecting means. In operation, the parachute means of the pairs switches between their active condition and passive condition in phase opposition with each other; the parachute means in the active condition causes the parachute means in the passive condition to slide along the connecting means up to a stable position.

A simplified summary of the present invention is herein presented in order to provide a basic understanding thereof; however, the sole purpose of this summary is of introducing some concepts of the invention in a simplified form as a prelude to its following more detailed description, and it is not to be interpreted as an identification of its key elements nor as a delineation of its scope.

In general terms, the solution according to embodiments of the present invention is based on the idea of using a simple pulling force for implementing the switching.

In particular, one or more aspects of the solution according to specific embodiments of the invention are set out in the independent claims, with advantageous features of the same solution that are set out in the dependent claims, with the wording of all the claims that is herein incorporated *verbatim* by reference (with any advantageous features provided with reference to a specific aspect of the solution according to an embodiment of the present invention that apply *mutatis mutandis* at any other aspect thereof).

More specifically, an aspect of a solution according to an embodiment of the invention provides a system for generating energy from a fluid flow, with switching means that comprises distantiating means for distantiating sailing means from aerostatic means and locking means for locking the sailing means in a separated position or in a contact position, wherein means is provided for applying a first pulling force to main connecting means (for connecting the switching means with energy conversion means) for deactivating the locking means in such a way to let the sailing means slide in the active condition up to the contact position (thereby switching to the passive condition) and for applying a second pulling force to the main connecting means for deactivating the locking means in such a way to let the sailing means slide in the passive condition up to the separated condition (thereby switching to the active condition).

Another aspect of a solution according to an embodiment of the invention provides a corresponding method.

The solution according to one or more embodiments of the invention, as well as additional features and its advantages, will be better understood with reference to the following detailed description, given purely by way of an indication and without limitation, to be read in conjunction with the attached figures (wherein corresponding elements are denoted with equal or similar references and their explanation is not repeated for the sake of brevity). In this respect, it is expressly understood that the figures are not necessarily drawn to scale (with some details that may be exaggerated and/or simplified) and that, unless otherwise specified, they are simply intended to conceptually illustrate the structures and procedures described herein. In particular:
FIG.1 illustrates a generator according to an embodiment of the present invention in an initial configuration of an active condition;
FIG.2 illustrates the generator of FIG.1 in a final configuration of the active condition;
FIG.3 illustrates the generator of FIG.1 in a first switching configuration from the active condition to a passive condition;
FIG.4 illustrates the generator of FIG.1 in a second switching configuration from the active condition to the passive condition;
FIG.5 illustrates the generator of FIG.1 in a recovery configuration in the passive condition;
FIG.6 illustrates the generator of FIG.1 in a first switching configuration from the passive condition to the active condition, and
FIG.7 illustrates the generator of FIG.1 in a second switching configuration from the passive condition to the active condition.

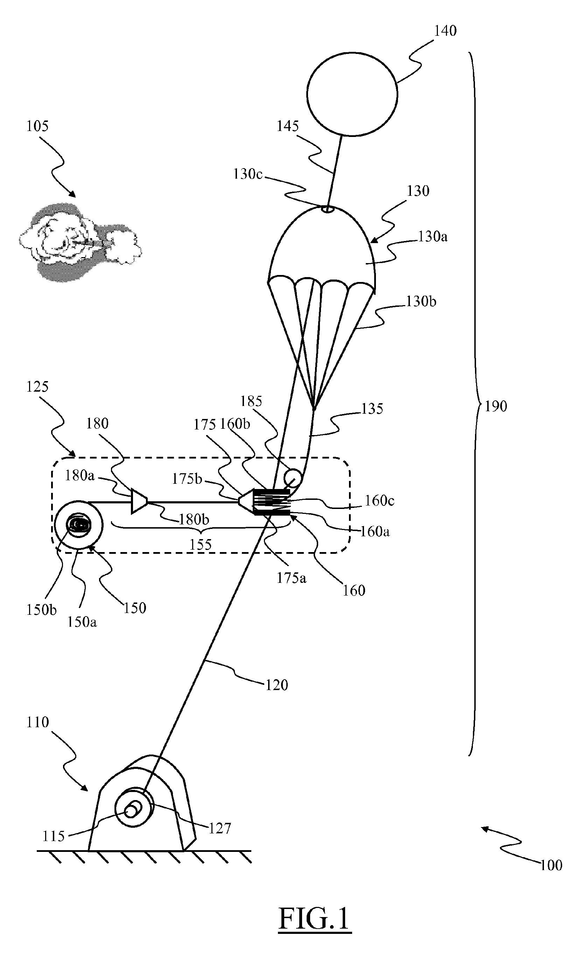

With reference to FIG.1, a system for generating energy 100 is illustrated according to an embodiment of the present invention in an initial configuration of an active condition.

In detail, the system for generating energy, or simply generator, 100 is adapted to generate a form of useful energy - for example, electricity - from a kinetic energy associated with a fluid flow, for example, a flow of air (wind) as shown pictorially in the figure and indicated by the reference 105. The generator 100 is bound to the ground and comprises an energy conversion element, for example, a converter 110 able to generate electricity from a rotation (in a first rotation direction) of a transmission shaft thereof, or simply shaft, 115. In addition, the converter 110 comprises a recovery element, for example, a winding electric motor (integrated in the converter and not shown in the figure) adapted to use, preferably although not limitatively, a portion of the energy produced by the converter 110 to rotate the shaft 115 (in a second rotation direction, opposite to the first one).

A main connecting cable 120 (for example, formed by one or more wires of metallic and/or synthetic material) is rotatably coupled with the shaft 115 of the converter 110 at one of its ends, while an opposite end is connected to a switching device 125. For example, the main connecting cable 120 is fixed to a winding element, as a pulley 127 of the generator 100, which in turn is coupled with the shaft 115 of the converter 110 (*i.e.,* fixed so as to have a central axis thereof corresponding to a central axis of the shaft 115). In this way, the main connecting cable 120 may be un-wound/wound from/to the pulley of the generator 127 in response to a rotation in the first/second sense of rotation of the shaft 115.

The switching device 125 is also connected to a sailing device 130 through a sailing connecting cable 135, and to an aerostatic device 140 through an aerostatic connecting cable 145.

Preferably, although not exclusively, the sailing device 130 is a parachute that comprises a sailing element 130a adapted to resist the wind 105 (as described below) and ropes 130b, which are connected to an end of the sailing connecting cable 135 (opposite to another end thereof connected to the switching device 125) and to the sailing element 130a (in peripheral positions thereof) for connecting the former to the latter.

Conversely, the aerostatic device 140 comprise an aerostatic element, such as a balloon, which is inflated with an element or a mixture of elements having a density lower than that of the fluid in which the generator 100 is immersed (for example, in the case in which the fluid is composed of air, helium He in the gas phase). Advantageously, the aerostatic device 140 is designed to support the switching device 125, the sailing device 130 and the connecting cables 120, 135 and 145 immersed in the fluid at a predetermined distance from the converter 110 (in the example at issue, suspended in air).

Furthermore, in order to allow a smooth transition of the sailing connecting cable 145 through the sailing element 130a, the latter comprises a passage 130c, for example, a circular hole formed in a central region of the sailing element 130a.

In a solution according to an embodiment of the present invention, the switching device 125 is designed to switch the sailing device 130 between an active condition in which it is carried away from the converter 110 by the fluid flow 105 and a passive condition in which such carrying away is minimized (as it will be described in detail below). For this purpose, the switching device 125 comprises a set of mechanical elements suitable to perform the switching between the active and passive conditions with a very limited contribution of kinetic energy (provided by an entity external to the switching device 125).

In detail, the switching device 125 comprises a distantiating device 150 connected to one end of the sailing connecting cable 135 and adapted to wind the latter, and a locking device 155 adapted to enable and disable a movement of the sailing connecting cable 135 (as described below).

For example, the distantiating device 150 comprises a spool 150a, on which the sailing connecting cable 135 is wound during its winding, and a spring winding element, such as a power spring 150b (e.g., a spiral torsion spring). In detail, the power spring 150b is designed in such a way to switch between a rest condition, when the sailing connecting cable 135 is substantially wound around the spool 150a, and an extended condition, when on the contrary the sailing connecting cable 135 is essentially un-wound from the spool 150a.

The locking device 155 comprises an elastic element 160, with which the sailing connecting cable 135 is coupled in a selectively sliding manner. The elastic element 160 is adapted to engage alternately with a first blocking element 175 or with a second blocking element 180 of the locking device 155; such blocking elements 175 and 180 are fixed to the sailing connecting cable 135 and have a shape such as to engage with the elastic element 160 in order to block the sailing connecting cable 135 in a first position or in a second position, respectively (as described in greater detail below). In particular, a distance *x1* of the second blocking element 180 from the first blocking element 175 along the sailing connecting cable 135 is shorter than a distance *x2* of the first blocking element 175 from the distantiating device 150.

The elastic element 160 comprises a first (lower) interference body 160a and a second (upper) interference body 160b, which are connected together by a spring element 160c, such as a helical spring. The spring element 160c is designed in such a way to maintain the interference bodies 160a and 160b close to each other in a rest condition, while in an extended condition of the spring element 160c the interference bodies 160a and 160b are distantiated from each other.

The blocking elements 175 and 180 have a substantially tapered shape, for example, a truncated cone, with one interference end 175a and 180a, respectively, having an extent (i.e., area) greater than that of a deformation end 175b and 180b, respectively, opposite the interference end 175a,180a. The first blocking element 175 is integrally coupled with the sailing connecting cable 135 with the interference end 175a facing the sailing device 135, while the second blocking element 180 is integrally coupled with the sailing connecting cable 135 with the interference end 180a facing the distantiating device 150. Preferably, the blocking elements 175 and 180 are coupled with the sailing connecting cable 135 along their central axis of symmetry (in the above example, the axis joining the centres of the bases of the truncated cone).

In particular, the elastic element 160 is designed in such a way that, when the spring element 160c is in the rest condition, the first blocking element 175 or the second blocking element 180 engages with the elastic element 160 (blocking the sliding of the sailing connecting cable 135), with the respective interference end 175a or 180a which engages with the two interference bodies 160a and 160b close to each other. In contrast, when the spring element 160c is in the extended condition, the two interference bodies 160a and 160b are separated from each other and the first blocking element 175 and/or the second blocking element 180 are not engaged by the elastic element 160 (unlocking the sliding of the sailing connecting cable 135).

In addition, the switching device 155 further comprises a guiding device 185 (e.g., one or more rollers and/or idler pulleys) for guiding the sailing connecting cable 135 during its sliding. For example, the guiding device 185 may be coupled with the second interference body 160b of the elastic element 160 in a substantially opposite position with respect to a position where the spring element 160c is connected to the second interference body 160b.

The first interference body 160a is preferably connected to the main connecting cable 120 (implementing the connection between the switching device 125 and the converter 110 mentioned above). Conversely, the second interference body 160b is preferably connected to the aerostatic connecting cable 145 (implementing the connection between the switching device 125 and the aerostatic device 140 mentioned above).

After having described the generator 100, a complete cycle of operation thereof will now be described with reference to FIGs.1-7.

Initially (as shown in FIG.1), the switching device 155 maintains the sailing device 130 in the active condition in which it is in a position separated from the aerostatic device 140. In detail, the spring element 160c is in the rest condition in which it maintains the interference bodies 160a and 160b close together. In this condition, the first blocking element 175 abuts (*i.e*., interferes with) the interference bodies 160a and 160b by its interference ends 175a, thereby blocking the sliding of the sailing connecting cable 135 towards the sailing device 130 and holding the sailing connecting cable 135 in an (initial) wound condition, with a portion of the cable wrapped on the spool 150a and with the spring winding element 150b in the rest condition. Therefore, the sailing element 130a of the sailing device 130 resists to the fluid flow 105, unfolding (*i.e*., swelling due to the wind) into the active condition, while the aerostatic device 140 rises up to an operating altitude (for example, 800m) dragging with it both the sailing device 130 and the switching device 125. As it is known, such operating altitude is substantially determined by a ratio between a density of the element (or mixture of elements) within the aerostatic balloon of the aerostatic device 140 and a density of the fluid in which the generator 100 is immersed, in a directly proportional manner, and by a mass (i.e., weight) of the elements of the generator 100 raised by the aerostatic device 140 (i.e., the sailing device 130, the switching device 125 and the connecting cables 120, 135 and 140), called as a whole aerial portion 190 hereinafter for the sake of simplicity, in an inversely proportional manner.

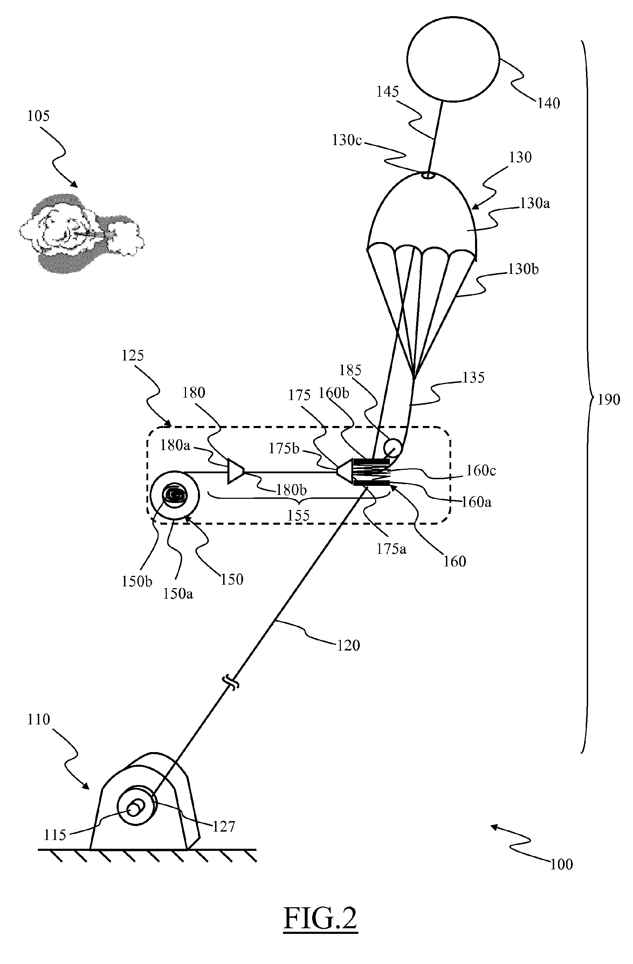

At the operating altitude (as shown in FIG.2), the fluid flow 105 performs work, transferring part of its kinetic energy to the sailing device 130 in the active condition and, consequently, to the aerial portion 190 which moves. In particular, the engagement of the first blocking element 175 with the elastic element 160 maintains the sailing connecting cable 135 blocked. In this way, the sailing device 130 is substantially integral with the switching device 125. Therefore, the switching device 125 is dragged together with sailing device 130, in the active condition, being driven by the fluid flow 105.

The carrying away of the aerial portion 190 from the converter 110, in particular the carrying away of the switching device 125, causes an unwinding of the connecting cable 120 and, therefore, a rotation of the shaft 115 connected to the pulley 127 of the generator 100, on which the main connecting cable 120 is wound. The rotation of the shaft 115 has the effect of transferring (at least in part) the kinetic energy associated with the movement of the aerial portion 190 to the converter 110. The converter 110 is configured to transform the kinetic energy of the rotation of the shaft 115 (at least partially) into a form of useful energy (e.g., electricity).

The generator 100 is thus able to generate useful energy from energy associated with the fluid flow 105 (in which it is immersed) apart from unavoidable losses due to the energy conversion losses and to the non-ideality of the components comprised in the generator 100.

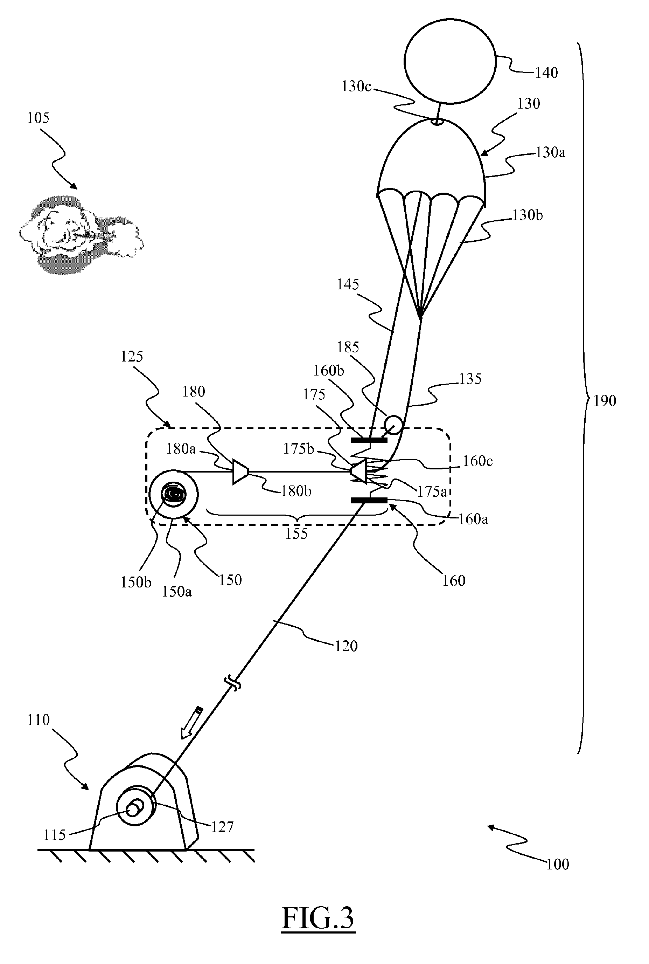

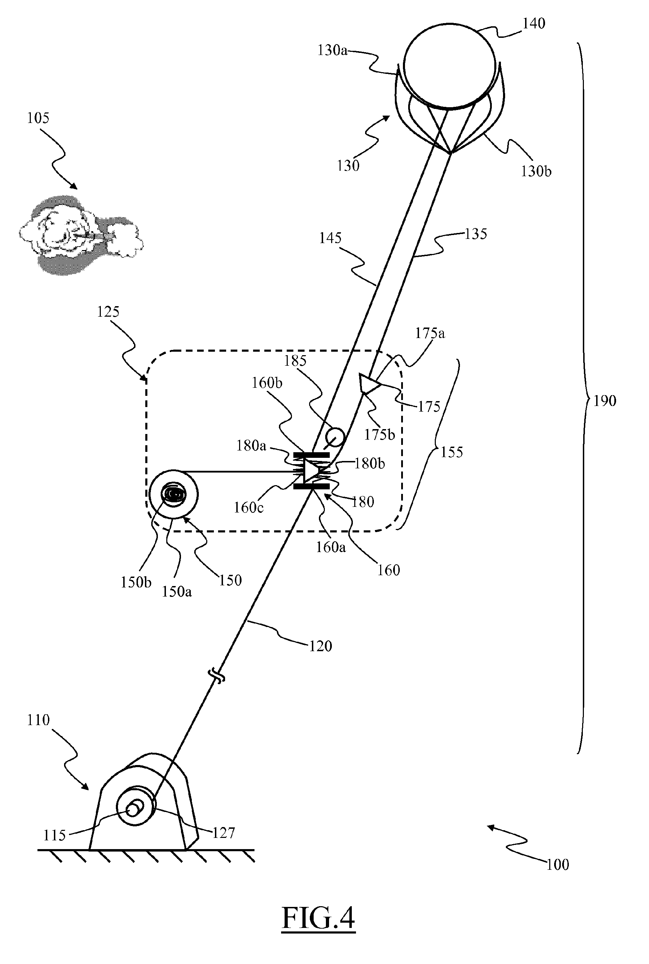

The aerial portion 190 is driven by the fluid flow 105 until a maximum removal is reached from the converter 110, in which the main connecting cable 120 is completely unwound. Consequently, a switching from the active condition to the passive condition starts (as illustrated in FIGs.3 and 4); this allows recovering the aerial portion 190 (by winding the main connecting cable 120 onto the pulley 127 of the converter 110) with a limited energy consumption, in order to bring the generator 100 back to the initial condition, for example, to start a new cycle of energy production.

Initially (as shown in FIG.3), the recovery element is actuated to provide kinetic energy to the switching device 125 in the form of a first pulling force (schematically shown as an arrow in FIG.3) of short duration that is applied to the first interference body 160a through the main connecting cable 120. Such pulling force, substantially opposite a dragging force provided by the aerostatic device 140 (applied to the second interference body 160b through the aerostatic connecting cable 145), has an intensity sufficient to deform the spring element 160c and to switch it into the extended condition (for example, 10-100N, preferably 20-80N, and still more preferably 30-70N, such as 50N).

In the extended condition, the interfering end 175a of the first blocking element 175 is free from the interference bodies 160a and 160b, spaced apart from each other, and the sailing connecting cable 135 is free to slide. Advantageously, the pulling force is applied only for a period of time sufficient to allow the passage of the first blocking element 175 through the elastic element 160 (for example, for 1-10s, preferably for 2-9s, and still more preferably for 3-8s, such as for 5s).

The sailing device 130 is then released from the switching device 125 (i.e., the sailing device 130 and the switching device 125 are no longer integral with each other) and they are driven by the fluid flow 105 toward the aerostatic device 140 (sliding along the aerostatic connecting cable 145); this causes the unwinding of the sailing connecting cable 135 from the spool 150a, whose rotation switches the spring winding element 150b into the extended condition.

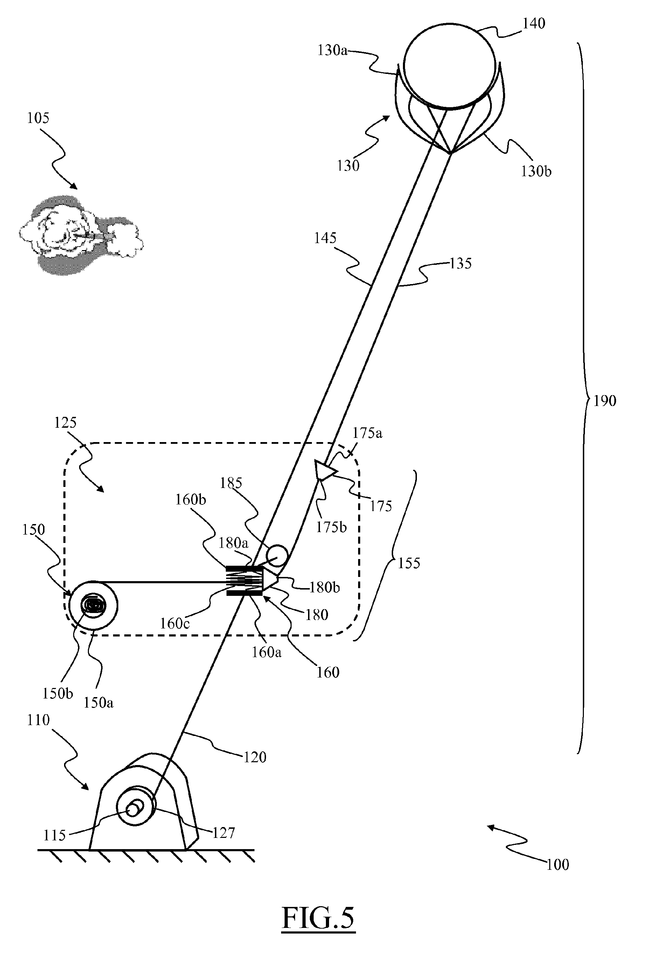

During the unwinding of the sailing connecting cable 135 (as shown in FIG.4), the second blocking element 180 intercepts the elastic element 160 via its deformation end 180b. Due to the reduced size of the deformation end 180b and to its tapered shape (with a substantially wedge-like profile), the second blocking element 180 is able to pass through the elastic element 160 by deforming the spring element 160c, thereby separating the interference bodies 160a and 160b; this result is achieved only thanks to the dragging of the sailing device 130, by leveraging the kinetic energy of the fluid flow 105 transferred to the sailing device 130 being unfolded. After the complete passage of the second blocking element 180 through the elastic element 160, the spring element 160c returns to the rest condition, with the interference bodies 160a and 160b (as shown in FIG.5) that interfere with the interference ends 180a (facing towards the distantiating device 150) of the second blocking element 180. This engagement between the second blocking element 180 and the elastic element 160 blocks a sliding of the sailing connecting cable 135 towards the distantiating device 150; in particular, the spring winding element 150b is maintained in the extended condition preventing the re-winding of the sailing connecting cable 135 on the spool 150a.

The sailing device 130 (no longer integral with the switching device 125) slides along the aerostatic connecting cable 145, driven by the fluid flow 105, until reaching a contact position in which the sailing device 130 comes into contact with the aerostatic device 140 thereby switching to the passive condition. In detail, in the passive condition the sailing element 130a wraps around the aerostatic balloon of the aerostatic device 140 because of the kinetic force imparted by the fluid flow 105 to the sailing element 130. Therefore, in the passive condition the sailing device 130 offers a minimum resistance to the fluid flow 105.

At this point, the generator 100 is in the passive condition and the main connecting cable 120 may be returned to its initial condition (shown in FIG.1) in order to start a new cycle of energy production. For this purpose, the converter 110 activates the recovery element (as shown in FIG.5), which uses part of the electric energy produced by the converter 110 to rotate the shaft 115 in the second rotating direction, opposite to the first one. In this way, the connecting cable 120 is recovered again by dragging the aerial portion 190 into the initial condition in opposition to the fluid flow 105.

Thanks to the minimum resistance that the sailing device 130 opposes to the fluid flow 105, the aerial portion 190 may be brought back into the initial condition with an extremely low energy consumption (since the friction forces that develop between the fluid flow 105 and the sailing element 130a, wrapped around the balloon, are minimal).

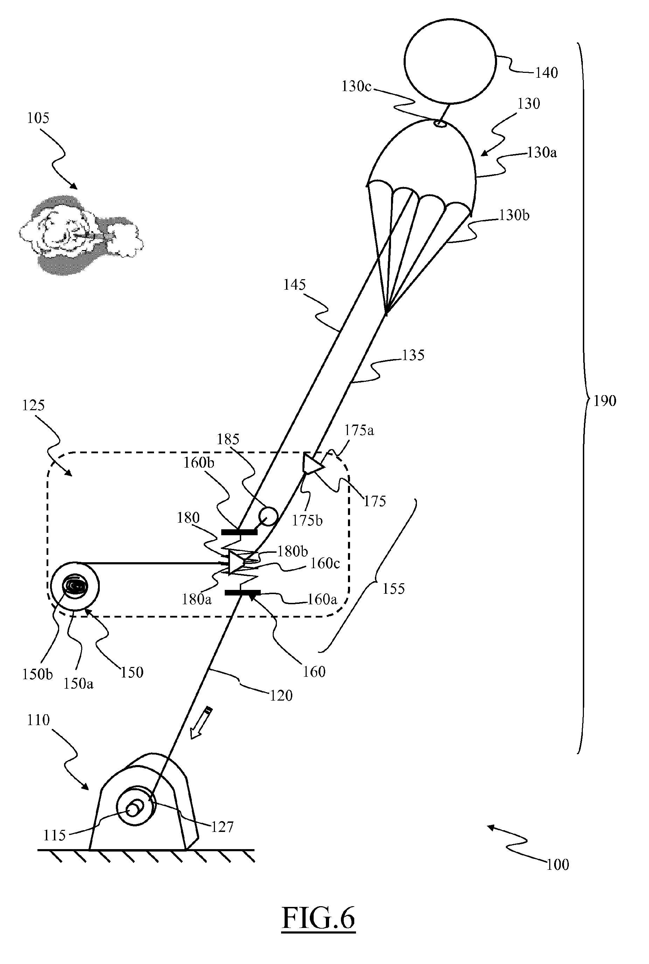

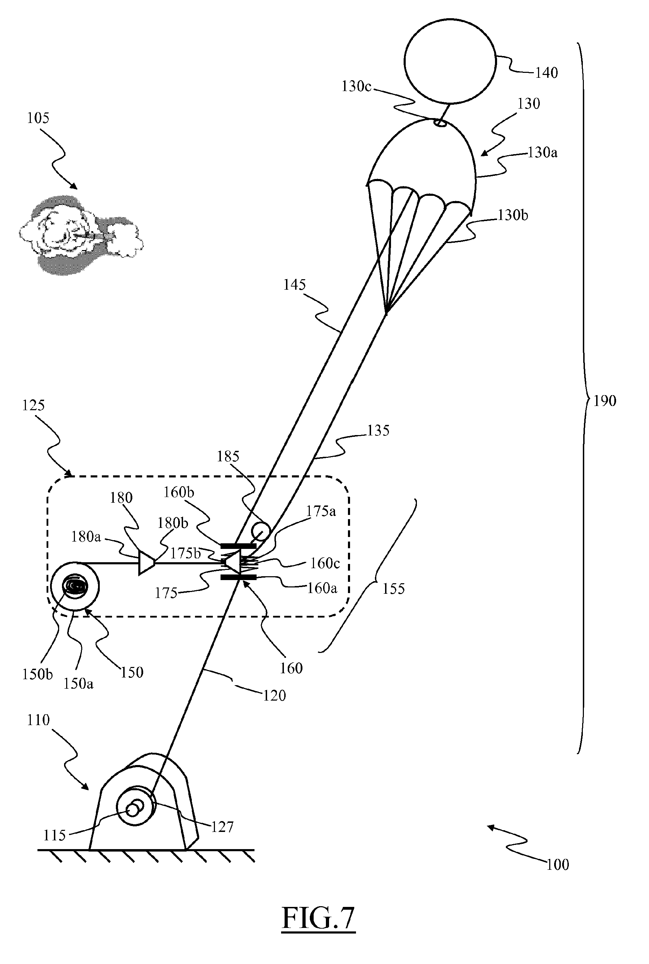

Subsequently, a switching from the passive condition to the active condition starts (as illustrated in FIGs.6 and 7), which allows bringing the generator 100 back to the initial configuration in order to start a new cycle of energy production.

Initially (as shown in FIG.6), the recovery element is actuated to provide a second pulling force (schematically shown as an arrow in FIG.6) completely analogous to the first pulling force, that is able to deform the spring element 160c in such a way to free the interference end 180a of the second blocking element 180 from the interference bodies 160a and 160b, thereby unlocking the sliding of the sailing connecting cable 135.

The spring winding element 150b is thus free to return to its rest condition, thereby causing the rotation of the spool 150a and the consequent winding of the sailing connecting cable 135 thereon.

During a re-winding of the sailing connecting cable 135 (as shown in FIG.7), the first blocking element 175 intercepts the elastic element 160 via its deformation end 175b. In a similar way as described above, the first blocking element 175 is able to pass through the elastic element 160 by deforming the spring element 160c thereby separating the interference bodies 160a and 160b simply thanks to the dragging of the sailing connecting element 135 due to the action of the spring winding element 150b. After the complete passage of the first blocking element 175 through the elastic element 160, the spring element 160c automatically returns to the rest condition (as shown in FIG.1) with the interference end 175a of the first blocking element 175 abutting the elastic element 160.

The winding of the sailing connecting cable 135 causes the sailing device 130 to detach and to separate from the aerostatic device 140, up to a separated position (as illustrated in FIG.1) at the end of the unwinding of the sailing connecting cable 135. In particular, during the winding of the sailing connecting cable 135, the sailing element 130a is separated from the aerostatic device 140 and it is again able to completely unfold and to offer resistance to the fluid flow 105 (as shown in FIG.1).

Later on, a new complete cycle of generation of useful energy may be started, which cycle takes place in the same way as just described.

The generator 100 according to an embodiment of the present invention allows generating useful energy in a reliable manner and with a switching between the opening and the closing of the element of resistance to the fluid flow that requires an extremely limited consumption of the produced useful energy (needed to provide the pulling forces described above) compared to the solutions known in the art.

Naturally, in order to satisfy local and specific requirements, a person skilled in the art may apply to the solution described above many logical and/or physical modifications and alterations. More specifically, although this solution has been described with a certain degree of particularity with reference to one or more embodiments thereof, it should be understood that various omissions, substitutions and changes in the form and details as well as other embodiments are possible. Particularly, different embodiments of the invention may even be practiced without the specific details (such as the numerical examples) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any embodiment of the disclosed solution may be incorporated in any other embodiment as a matter of general design choice. In any case, the terms comprising, including, having and containing (and any of their forms) should be understood with an open and non-exhaustive meaning (*i.e*., not limited to the recited elements), the terms based on, dependent on, according to, function of (and any of their forms) should be understood as a non-exclusive relationship (*i.e*., with possible further variables involved) and the term a should be understood as one or more elements (unless expressly stated otherwise).

For example, one embodiment of the present invention proposes a system for generating energy from a fluid flow. The system comprises energy conversion means, sailing means (switchable between an active condition in which it is carried away from the energy conversion means by the fluid flow and a passive condition in which said carrying away is minimized), switching means for switching the sailing means between the active condition and the passive condition, sailing connecting means for connecting the sailing means with the switching means, and main connecting means for connecting the switching means with the energy conversion means. The main connecting means acts on the energy conversion means for converting part of the kinetic energy supplied to the sailing means by the fluid flow into said energy when the switching means is carried away from the energy conversion means by the sailing means in the active condition. The system further comprises recovery means acting on the main connecting means for returning the switching means and the sailing means in the passive condition towards the energy conversion means, aerostatic means for biasing the switching means apart from the conversion means, aerostatic connecting means for connecting the aerostatic means to the switching means (with the sailing means that is slidable along the aerostatic connecting means). The switching means comprises distantiating means acting on the sailing connecting means for distantiating the sailing means from the aerostatic means, locking means for locking the sailing connecting means in a separated position (in which it maintains the sailing means separated from the aerostatic means in opposition to the fluid flow) and in a contact position (in which it maintains the sailing means in contact with the aerostatic means in opposition to the distantiating means). The system further comprises means for applying a first pulling force to the main connecting means upon reaching a first distance of the switching means from the energy conversion means (for deactivating the locking means with the sailing connecting means in the separated position, in such a way to let the sailing means in the active condition slide towards the aerostatic means at least up to the contact position of the sailing connecting means wherein the sailing means wraps onto the aerostatic means thereby switching to the passive condition) and for applying a second pulling force to the main connecting means upon reaching a second distance of the switching means from the energy conversion means lower than the first distance (for deactivating the locking means with the sailing connecting means in the contact position in such a way to let the sailing means in the passive condition slide away from the aerostatic means at least up to the separated position of the sailing connecting means thereby switching to the active condition).

However, the system may be used to generate any type of useful energy (for example, simply mechanical one) from the flow of any fluid (for example, water in the sea or in a river). The energy conversion means may be implemented in any way (for example, with an alternator or an electrical motor). The sailing means may be implemented in any way (for example, with a parachute or a kite); the active condition and the passive condition of the sailing means may be defined in any way (for example, when it has different profiles), but in any case with the carrying away of the sailing means that is substantially reduced in the passive condition with respect to the active condition (for example, lower than 40%, preferably lower than 20%, and still more preferably lower than 10%). The switching means may be implemented in any way (see below). The sailing connecting means may be implemented in any way (for example, with a tape). The main connecting means may be implemented in any way (for example, with a tape as well), and it may act on the energy conversion means in any way (for example, raising a weight). The recovery means may be implemented in any way (for example, with a dedicated motor). The aerostatic means may be implemented in any way (for example, with a weight when the system is used in the water). The aerostatic connecting means may be implemented in any way (for example, with a tape as well), with the sailing means that may slide along it in any way (for example, through an external guide). The distantiating means and the locking means may be implemented in any way (see below); moreover, the sailing means may slide beyond the contact position and/or the separated position and then returns to it after their locking. The first and second pulling forces may have any intensity, may be applied at any distances of the switching means from the energy conversion means (for example, even before the complete unwinding of the main connecting means) and with any means, even independently (for example, one or two dedicated motors; moreover, nothing prevents designing the locking means in such a way to be deactivated by using a recoil force associated with a complete winding/unwinding of the main connecting means.

In an embodiment of the invention, the locking means comprises an elastic element that blocks the sailing connecting means in the separated position and in the contact position in a rest condition. The elastic element deforms in response to the first pulling force and to the second pulling force in such a way to release the sailing connecting means.

However, nothing prevents providing the locking means to block the sailing means through the elastic element in further positions and to unblock the sailing means with respective further pulling forces. In any case, the locking means may also be implemented with another structure, even not based on any elastic element (for example, a latch).

In an embodiment of the invention, the locking means further comprises a first blocking element integral with the sailing connecting means (adapted to interfere with the elastic element for blocking the sailing connecting means in the separated position) and a second blocking element integral with the sailing connecting means (adapted to interfere with the elastic element for blocking the sailing connecting means in the contact position). The second blocking element is arranged between the first blocking element and the distantiating means along the sailing connecting means.

However, nothing prevents providing the blocking elements in any position, or additional blocking elements to block the connecting sailing means in further positions. In an embodiment of the invention, the elastic element comprises two interference bodies and a spring element that connects the two interference bodies together; the spring element in a rest condition maintains the two interference bodies close to each other in such a way to interfere with the first blocking element in the separated position or with the second blocking element in the contact position. Moreover, one of the two interference bodies is connected to the main connecting means; the first pulling force and the second pulling force causes a deformation of the spring element such as to move the two interference bodies away from each other in such a way not to interfere with the first blocking element or with the second blocking element, respectively.

However, nothing prevents providing a spring element of a different type (for example, of the torsion type) and/or providing suitable alternative bodies adapted to engage the blocking elements in a different way (for example, vise-like ends adapted to catch the blocking elements).

In an embodiment of the invention, a distance of the second blocking element from the first blocking element along the sailing connecting means is lower than a distance of the first blocking element from the distantiating means along the sailing connecting means when in the separated position.

However, nothing prevents the blocking elements from having a different distance from each other along the connecting sailing means.

In an embodiment of the invention, the first blocking element comprises an interference end facing the sailing means and adapted to interfere with the elastic element for blocking the sailing connecting means in the separated position. Furthermore, the first blocking element comprises a deformation end facing the distantiating means and adapted to cause a deformation of the elastic element in such a way to allow the passage the first blocking element during the sliding of the sailing means in the passive condition away from the aerostatic means. Similarly, the second blocking element comprises an interference end facing the distantiating means adapted to interfere with the elastic element for blocking the sailing connecting means in the contact position. Furthermore, the second blocking element comprises a deformation end facing the sailing means adapted to cause a deformation of the elastic element in such a way to allow the passage of the second blocking element during the sliding of the sailing means in the active condition towards the aerostatic means.

However, nothing prevents forming the blocking elements with a different structure, for example, by defining an intermediate portion adapted to couple with interlocking interference bodies of the elastic element to block the sliding of the sailing means in an intermediate condition.

In an embodiment of the invention, the first blocking element and the second blocking element have a tapered shape, the interference end of each one having an extent greater than the respective deformation end has.

However, nothing prevents forming the blocking elements with a different shape, for example, with an elliptical cross section with an interference projection in a central position thereof.

In an embodiment of the invention, the switching means further comprises guiding means for guiding the sailing connecting means during the sliding of the sailing means.

However, the guiding means may be implemented in any way (for example, with a sheath); in any case, nothing prevents omitting this feature and/or providing further guiding means for the connecting sailing means, for the main connecting means and/or for the aerostatic connecting means.

In an embodiment of the invention, the distantiating means comprises a spring winding element.

However, nothing prohibits the use of a different winding element, e.g., an electromechanical winding element.

Generally, similar considerations apply if the system has a different structure or comprises equivalent components (for example, of different materials), or it has other operative characteristics. In any case, every component thereof may be separated into more elements, or two or more components may be combined together into a single element; moreover, each component may be replicated to support the execution of the corresponding operations in parallel. Moreover, unless specified otherwise, any interaction between different components generally does not need to be continuous, and it may be either direct or indirect through one or more intermediaries.

A different embodiment of the present invention proposes a method for generating energy from a fluid flow, the method comprising the iteration of the following steps. Sailing means is switched from a passive condition to an active condition in which it is carried away from energy conversion means by the fluid flow through switching means upon reaching a first distance of the switching means from the energy conversion means; main connecting means (connecting the switching means with the energy conversion means) acts on the energy conversion means when the switching means is carried away from the energy conversion means by the sailing means in the active condition for converting part of the kinetic energy provided to the sailing means by the fluid flow into said energy. In detail, the switching of the sailing means from a passive condition to an active condition comprises the following steps. A first pulling force is applied to the main connecting means for deactivating locking means that locks sailing connecting mean (which connects the sailing means with the switching means) in a contact position in which it maintains the sailing means in contact with aerostatic means (which biases the switching means apart from the energy conversion means), in opposition to distantiating means (which acts on the sailing connecting means for carrying away the sailing means from the aerostatic means), in such a way to let the sailing means in the passive condition slide along aerostatic connecting means (which connects the switching means with the aerostatic means), away from the aerostatic means at least up to a separated position of the sailing connecting means (in which the sailing means is separated from the aerostatic means thereby switching into the active condition). The sailing connecting means is blocked in the separated position in which it maintains the sailing means separated from the aerostatic means in opposition to the fluid flow. The method then continues with switching the sailing means from the active condition to the passive condition (in which said carrying away is minimized) through the switching means upon reaching a second distance of the switching means from the energy conversion means greater than the first distance. In detail, the switching of the sailing means from the active condition to the passive condition comprises the following steps. A second pulling force is applied to the main connecting means for deactivating the locking means that locks the sailing connecting means in the separated position, in such a way to let the sailing means in the active condition slide along the aerostatic connecting means towards the aerostatic means at least up to the contact position of the sailing connecting means wherein the sailing means wraps onto the aerostatic means thereby switching into the passive condition. The sailing connecting means is blocked in the contact position. The switching means and the sailing means in the passive condition are returned towards the energy conversion means by recovery means acting on the main connecting means.

However, the method may be implemented with different components (see above).

In general, similar considerations apply if the same solution is implemented with an equivalent method (using similar steps with the same functions of more steps or of portions thereof, removing some steps being not essential, or adding further optional steps); moreover, the steps may be performed in different order, in parallel or overlapped (at least in part).

## Claims

1. A system for generating energy (100) from a fluid flow (105), the system comprising:
energy conversion means (110),
sailing means (130) switchable between an active condition in which it is carried away from the energy conversion means by the fluid flow and a passive condition in which said carrying away is minimized,
switching means (125) for switching the sailing means between the active condition and the passive condition,
sailing connecting means (135) for connecting the sailing means with the switching means,
main connecting means (120) for connecting the switching means with the energy conversion means, the main connecting means acting on the energy conversion means for converting part of the kinetic energy supplied to the sailing means by the fluid flow into said energy when the switching means is carried away from the energy conversion means by the sailing means in the active condition,
recovery means acting on the main connecting means for returning the switching means and the sailing means in the passive condition towards the energy conversion means,
aerostatic means (140) for biasing the switching means apart from the conversion means,
aerostatic connecting means (145) for connecting the aerostatic means to the switching means, the sailing means being slidable along the aerostatic connecting means,
wherein the switching means comprises:
distantiating means (150) acting on the sailing connecting means for distantiating the sailing means from the aerostatic means,
locking means (155) for locking the sailing connecting means in a separated position in which it maintains the sailing means separated from the aerostatic means in opposition to the fluid flow and in a contact position in which it maintains the sailing means in contact with the aerostatic means in opposition to the distantiating means,
and wherein the system further comprises means for applying a first pulling force to the main connecting means upon reaching a first distance of the switching means from the energy conversion means for deactivating the locking means with the sailing connecting means in the separated position in such a way to let the sailing means in the active condition slide towards the aerostatic means at least up to the contact position of the sailing connecting means wherein the sailing means wraps onto the aerostatic means thereby switching to the passive condition and for applying a second pulling force to the main connecting means upon reaching a second distance of the switching means from the energy conversion means lower than the first distance for deactivating the locking means with the sailing connecting means in the contact position in such a way to let the sailing means in the passive condition slide away from the aerostatic means at least up to the separated position of the sailing connecting means thereby switching to the active condition.

2. The system for generating energy (100) according to claim 1, wherein the locking means (155) comprises an elastic element (160) that blocks the sailing connecting means (135) in the separated position and in the contact position in a rest condition, the elastic element deforming in response to the first pulling force and to the second pulling force in such a way to release the sailing connecting means.

3. The system for generating energy (100) according to claim 2, wherein the locking means (155) further comprises a first blocking element (175) integral with the sailing connecting means (135) adapted to interfere with the elastic element (160) for blocking the sailing connecting means in the separated position and a second blocking element (180) integral with the sailing connecting means adapted to interfere with the elastic element for blocking the sailing connecting means in the contact position, the second blocking element being arranged between the first blocking element and the distantiating means along the sailing connecting means.

4. The system for generating energy (100) according to claim 3, wherein the elastic element (160) comprises two interference bodies (160a, 160b) and a spring element (160c) that connects the two interference bodies together, the spring element in a rest condition maintaining the two interference bodies close to each other in such a way to interfere with the first blocking element (175) in the separated position or with the second blocking element (180) in the contact position, and
wherein one of the two interference bodies (160a) is connected to the main connecting means (120), the first pulling force and the second pulling force causing a deformation of the spring element such as to move the two interference bodies away from each other in such a way not to interfere with the first blocking element or with the second blocking element, respectively.

5. The system for generating energy (100) according to claim 4, wherein a distance of the second blocking element (180) from the first blocking element (175) along the sailing connecting means is lower than a distance of the first blocking element from the distantiating means (150) along the sailing connecting means (130) when in the separated position.

6. The system for generating energy (100) according to any one of claims 3 to 5, wherein the first blocking element (175) comprises an interference end (175a) facing the sailing means (130) adapted to interfere with the elastic element (160) for blocking the sailing connecting means (135) in the separated position and a deformation end (175b) facing the distantiating means (150) adapted to cause a deformation of the elastic element in such a way to allow the passage the first blocking element during the sliding of the sailing means in the passive condition away from the aerostatic means, and
wherein the second blocking element (180) comprises an interference end (180a) facing the distantiating means adapted to interfere with the elastic element for blocking the sailing connecting means in the contact position and a deformation end (180b) facing the sailing means adapted to cause a deformation of the elastic element in such a way to allow the passage of the second blocking element during the sliding of the sailing means in the active condition towards the aerostatic means.

7. The system for generating energy (100) according to claim 6, wherein the first blocking element (175) and the second blocking element (180) have a tapered shape, the interference end (175a, 180a) of each one having an extent greater than the respective deformation end (175b, 180b) has.

8. The system for generating energy (100) according to any one of claims 1 to 7, wherein the switching means (125) further comprises guiding means (185) for guiding the sailing connecting means (135) during the sliding of the sailing means (130).

9. The system for generating energy (100) according to any one of claims 1 to 8, wherein the distantiating means comprises a spring winding element (150b).

10. A method for generating energy from a fluid flow (105), the method comprising the iteration of the steps of:
switching sailing means (130) from a passive condition to an active condition in which it is carried away from energy conversion means (110) by the fluid flow through switching means (125) upon reaching a first distance of the switching means from the energy conversion means, main connecting means (120) connecting the switching means with the energy conversion means acting on the energy conversion means when the switching means is carried away from the energy conversion means by the sailing means in the active condition for converting part of the kinetic energy provided to the sailing means by the fluid flow into said energy, wherein the switching of the sailing means from a passive condition to an active condition comprises:
applying a first pulling force to the main connecting means for deactivating locking means (155) that locks sailing connecting means (135), which connects the sailing means with the switching means, in a contact position in which it maintains the sailing means in contact with aerostatic means (140), which biases the switching means apart from the energy conversion means, in opposition to distantiating means (150), which acts on the sailing connecting means for carrying away the sailing means from the aerostatic means, in such a way to let the sailing means in the passive condition slide along aerostatic connecting means (145), which connects the switching means with the aerostatic means, away from the aerostatic means at least up to a separated position of the sailing connecting means in which the sailing means is separated from the aerostatic means thereby switching into the active condition, and
blocking the sailing connecting means in the separated position in which it maintains the sailing means separated from the aerostatic means in opposition to the fluid flow,
switching the sailing means from the active condition to the passive condition in which said carrying away is minimized through the switching means upon reaching a second distance of the switching means from the energy conversion means greater than the first distance, wherein the switching of the sailing means from the active condition to the passive condition comprises:
applying a second pulling force to the main connecting means for deactivating the locking means that locks the sailing connecting means in the separated position, in such a way to let the sailing means in the active condition slide along the aerostatic connecting means towards the aerostatic means at least up to the contact position of the sailing connecting means wherein the sailing means wraps onto the aerostatic means thereby switching into the passive condition, and
blocking the sailing connecting means in the contact position, and
returning the switching means and the sailing means in the passive condition towards the energy conversion means by recovery means acting on the main connecting means.
